# EUROPEAN PATENT SPECIFICATION

(11) **EP 3 030 704 B1**
(45) Date of publication and mention of the grant of the patent: **27.02.2019**
(21) Application number: 13753296.6
(22) Date of filing: 09.08.2013
(51) Int. Cl.: D04H 1/4209, D04H 1/74, E04D 5/10

(54) **MINERAL FIBER BATTING FOR THE MANUFACTURE OF THERMALLY INSULATING COMPOSITE**
MINERALFASERFÜLLUNG ZUR HERSTELLUNG EINES WÄRMEISOLIERENDEN VERBUNDSTOFFES
NAPPE DE FIBRES MINÉRALES POUR LA FABRICATION DE COMPOSITE THERMO-ISOLANT

(43) Date of publication of application: 15.06.2016
(73) Proprietor: Saint-Gobain Isover, 92400 Courbevoie (FR)
(72) Inventor: ALENGRIN Simon, Hadleigh IP7 6DW (GB)
(74) Representative: Saint-Gobain Recherche
(86) International application number: PCT/EP2013/066765
(87) International publication number: WO 2015/018462

(56) References cited:
- WO-A1-95/06013
- DD-A1- 216 280
- DE-A1- 3 118 495
- GB-A- 2 253 184

## Description

The invention relates to the field of mineral fiber products and more particularly pertains to a mineral fiber batting for the manufacture of thermally insulating composites.

Mineral fiber reinforcements are widely used in the field of composite materials, for instance as fiber mats, or veils or fabrics. They can easily be combined with other materials, for instance by impregnation with a liquid such as a resin. However, the range of the products that can be produced is often limited by the thickness of the fiber reinforcement material.

Especially for application in the field of thermal insulation, this is a problem as the insulation performance is directly linked with the thickness. Therefore, even if the insulating composite is very performant, it is always desirable to provide higher thickness to achieve higher levels of insulation.

On the other hand, the battings currently available as mats or veils of a few millimeters thickness or fabrics usually one millimeter or less, are very satisfactory in view of the process operations for manufacturing the composite. For most of the transformation techniques, the reinforcement batting should have mechanical properties that allow to transport it in the most convenient way before transformation, and to handle it and include it in a transformation line, and to endure the mechanical strain occurring within the transformation process. More particularly, in a continuous process of impregnation, the batting is conveyed throughout the line while being wet, and degradation of the wet batting must be avoided. Fiber mats, veils and fabrics have good tensile strength particularly in the machine direction.

The present invention aims to provide a fiber batting that can be used in the manufacture of composite material with a thickness higher than the available reinforcement without creating process issues for the transformation.

One particular field of application of the batting of the invention is a process of manufacturing a fiber reinforced gel composite comprising the steps of, providing a fiber batting sheet, combining the batting with a gel precursor, gelling the combination to make a composite, rolling the composite; and drying the composite to make a fiber reinforced gel composite, like fiber reinforced silica aerogel composite.

Aerogels, which exhibit extremely low density, high surface area, good optical, thermal, and acoustic properties, have been explored for various applications. However, aerogels have inherent drawbacks such as weakness and brittleness. Various types of reinforcements may be used to add strength, flexibility and other important properties to aerogels. Fiber reinforced aerogel composites may be made from adding loose fibers or non- woven fiber sheets to the gel precursors, gelling the combination to make a gel sheet, aging the gel sheet and drying the formed gel sheet.

Aerogels, which exhibit extremely low density, high surface area, good optical, thermal, and acoustic properties, have been used previously to try to address this need and other needs for which their properties could be advantageous. However, aerogels have inherent drawbacks such as weakness and brittleness. Notably, when making highly transparent and hydrophobic aerogels, brittleness becomes much more acute, and thus they are more difficult to handle, and require long cycle times for fluid drying in order to avoid cracking.

The weakness and brittleness of low density aerogels can particularly have a negative impact on production scale-up and limit large scale manufacturing. Additionally, aerogels with lower densities may have the best transparency, but also exhibit higher thermal conductivity and thus, exhibit worse insulation performance.

The fragile structure of an aerogel (low density and high porosity) also poses several difficulties in conforming to irregular surfaces, or maintaining integrity in dynamic conditions such as when sandwiched between glass and different thermal expansion coefficients between glass and aerogel results in compressive forces. So, flexibility, compressibility, integrity, durability, strength, and resistance to sintering, dusting and cracking are all areas for potential improvement in aerogels and aerogel composites.

A number of attempts have been made to improve aerogels and aerogel composites to address these problems and take fuller advantage of their remarkable properties as materials. Some patents describe attempts to make composites with foams and particulate aerogels, for example, EP0489319, and US Patent Nos. 6,136,216; 5,691,392; 6,040,375; and 6,068,882. Others, for example, US Patent Nos. 4,966,919; 5,037,859; 5,972,254; 5,973,015; and 6,087,407; and US Patent Application Publication No. 2002 / 0094426 describe other aerogel or aerogel composites with or without foams. Some, such as US Patent Application Publication No. 2005/0192367 and US Patent

Application Serial No. 11 / 392,925 describe transparent aerogels or aerogel composites.

Within the context of embodiments of the present invention "aerogels" or "aerogel materials" along with their respective singular forms, refer to gels containing air as a dispersion medium in a broad sense, and gels dried with supercritical fluids in a narrow sense. The chemical composition of aerogels can be inorganic, organic (including polymers) or hybrid organic-inorganic. Inorganic aerogels may be based on Silica, Titania, Zirconia, Alumina, Hafnia, Yttria, Ceria, Carbides and Nitrides. Organic aerogels can be based on compounds including but are not limited to: urethanes, resorcinol formaldehydes, polyimide, polyacrylates, chitosan, polymethylmethacrylate, members of the acrylate family of oligomers, trialkoxysilyl terminated polydimethylsiloxane, polyoxyalkylene, polyurethane, polybutadiane, melamine- formaldehyde, phenol-furfural, a member of the polyether family of materials or combinations thereof. Examples of organic-inorganic hybrid aerogels include, but are not limited to: silica-PMMA, silica-chitosan, silica-polyether or possibly a combination of the aforementioned organic and inorganic compounds. Published US patent applications 2005/0192367 and 2005/0192366 teach extensively of such hybrid organic-inorganic materials.

Aerogels applicable to the present invention include such aerogels which are reinforced by a fibrous structure. Such reinforcements provide strength and flexibility to the aerogel structure. US patents 6068882, 6087407, 6770584, 5124101, 5973015, 6479416, 5789075, 5866027, 5786059, 5972254, 4363738, 4447345, PCT application WO9627726, U.S. patent applications 20020094426, 2003077438, Japanese patent JP8034678, U.K. Patent GB1205572 teach some of the aerogel materials that may be practiced with the embodiments of the present invention. Flexible aerogel materials can also have form factors that are blankets or thin strips. Although many of the embodiments of the present invention are focused towards coating aerogel composites, they can also be used to coat other forms of aerogels.

Fiber reinforcement when applied appropriately results in flexible aerogel materials. Such flexibility in aerogel materials is desirable in a variety of applications where said aerogel materials can be drop-in-replacements for the existing materials. However, flexibility sometimes may also result in certain damage to the aerogel structure. Though it may not affect other critical properties of aerogel materials, it can present a nuisance to physical handling. The present invention, in many of its embodiments provides methods to minimize the effects of such damage and further prevent any such damaged material from dislodging from the material matrix. Hence, any consequential mechanical handling issues related to aerogel particulate materials on the surface of such aerogel material are avoided and substantially reduced by the methods of the present invention.

It has been shown that the retrofit of existing homes, buildings and structures with insulation possessing high thermal resistance can significantly reduce energy consumption and corresponding CO₂ emissions. There has thus been a strong desire to develop aerogel-based insulation materials for the building and construction market. For applications not involving cavity wall and/or lofted attic insulation, a preferred product for this market is rigid panels. For instance, many interior or exterior retrofits of buildings involve the installation of non-flexible board stock such as mineral wool or EPS foam. Over the past decade, there has been a renewed interest in producing rigid panels with thermal insulation materials with greater R-values than that currently on the market. High performance aerogel-based insulation has been of particular interest. Fiber reinforced aerogel insulation is currently commercially available in high volume as a flexible durable composite at thicknesses not exceeding 10mm. Multiple plies of these materials are typically laminated with adhesives to produce a rigid board of greater thickness. Because flexible aerogel based insulation is necessarily produced as a rolled-good, it may possess a certain degree of winding defects in the form of buckles, undulations and/or thickness variations or extensive process control needs to be employed to manage these issues. The presence of these defects makes the lamination of flexible aerogel materials into rigid board stock a challenge. Individual plies of aerogel insulation with surface defects result in an incomplete surface bond due to the inability to attain full surface mating of each individual ply during the lamination process. Panels produced in such a fashion thus contain a large number of voids and defects that not only affect mechanical strength but also overall thermal performance. There thus exists a strong need to eliminate the surface defects of these materials that are due mainly to the stresses imposed by winding and unwinding, stresses typically associated with the manufacture of rolled goods. The winding and unwinding process associated with the production of flexible composite aerogel insulation also obviates the use of rigid fibrous based materials as reinforcement for these composites. Fibrous materials with high binder content and/or materials that are minimally rigid cannot sustain the winding/unwinding process of rolled- good manufacture without sustaining copious amounts of defects in the form of delaminations, buckles and/or tears. Due to substantially improved economics, there is a strong desire to enable the use of lower cost fibrous reinforcements with high binder content for the production of flexible aerogel insulation. To date, these types of material are too rigid to be wound around a tight radii without imparting non-conformities in the presence of folds, tears and delaminations. There thus exists a strong need to develop a process that could enable the winding and subsequent aerogel processing of such material without imparting the damage associated with winding. For the purposes of this patent application, a rigid panel is to be understood as the ability of the panel of practical installable surface area (from 0.1 to 10 m²) to hold its own weight without bending to the extent that it interferes in the practical handling and installation. While one can make rigid panels by attaching non-rigid planar material to another rigid material, the present invention focuses on one or more gel-composite layers attached through adhesives being rigid as described above.

The present invention provides a fibrous substrate with increased rigidity that is suitable for use for an efficient manufacture of flat-panel aerogel-based boards. Such rigid substrates are not normally amenable to standard processing in a cylindrical vessel for the various processes involved in manufacturing gel composites. Efficient utilization of vessels necessitates the manufacture of fiber reinforced aerogel materials in rolled good form in order to maximize the volume of a cylindrical vessel and reduce the fixed costs associated with production. Conventional practices thus dictate that the fiber reinforcements used to reinforce aerogels need to have sufficient flexibility to sustain winding and unwinding. Materials with excess rigidity and/or materials with high binder content do not normally process well and typically result in the manufacture of aerogel composites with excessive defects in the form of folds, buckles, delaminations and tears. The final product formed using such rigid reinforcements is thus not amenable to the production of flat-panel board stock, the preferred product form for building and construction applications. The excessive amount of defects in such products diminishes thermal performance, material integrity and severely complicates any fabrication process.

The goals described above have been achieved by a fiber batting for the manufacture of thermally insulating composite comprising :
- a semi-rigid fibrous batt including mineral wool fibers bonded by a binder
- a facing sheet adhered to one outer main surface of the fibrous batt by means of a binder or adhesive,
   wherein
- the density of the semi-rigid fibrous batt is above 20 kg/m3, especially selected in the range from 22 to 35 kg/m3,
- the thickness of the fibrous batt is at least 10 mm, preferably 15 mm, especially 20 mm
- the fibers are arranged in a substantially laminar layout with a majority of fibers parallel to the main face,
- the batt being provided in a rolled form with the facing sheet interior to the roll and is packaged into a roll packaged unit.

According to other features of the invention :
- the batt is provided with alterations such that it can be rolled with the facing sheet interior to the roll.
- the batt is compressed inside the roll to a thickness of 1:2 to 1:6 of the initial thickness.
- the alterations are obtained by scoring the fibrous batt throughout at least one half of its thickness.
- the depth of scoring varies or the scoring is not continuous across the width of the batt.
- the thickness of the batt is higher than 25 mm and the depth of scoring is less than 1:2 of the batt's thickness.
- the alterations are obtained by locally modifying mechanically the fibrous structure, especially by punching so as to soften the batt locally.
- the alterations are regularly spaced longitudinally by a distance of 1 to 20 cm, especially from 1 to 5 cm , preferably 1 to 2 cm.
- the batt is at least 5 m, especially from 10 to 40 m long before rolling.
- the facing sheet comprises fibers, especially is selected from glass fiber mats or fabrics.
- a facing sheet is provided on the other outer main surface.
- the mineral wool fibers are mineral wool or glass wool fibers.

The batt according to the invention is suitable for use as reinforcement for manufacture of aerogel composites, it also applies to the manufacture of non-aerogel containing composites.

In another aspect, the invention relates to the use of the fiber batting according to any one of the preceding claims for making a non-aerogel containing composite, wherein the voids between fibers are filled with an impregnation composition combining particulate material with a binder and/or with a foaming composition based on organic and/or inorganic materials..

Within the frame of this invention, "semi-rigid" means that the fiber batting has enough flexibility for being bent or rolled up, while having sufficient mechanical strength to essentially retain its shape when manipulated. In some preferred embodiments, this can be expressed by the deviation under deadweight test as described in the ACERMI method : the product is laid on a table with one portion extending beyond the edge of the table, laying flat without any support. The deflection of the product is the height the end of the product reaches below the horizontal level of the table. The deflection observed for the product is not more than 50 mm when a product length of 50 cm is allowed to lay flat under deadweight

According to the invention, the fibers are arranged in a substantially laminar layout with a majority of fibers parallel to the main face; such arrangement may typically be achieved by the mineral wool forming process wherein the fibers are generated by a fiberizing apparatus in an air flow and the air borne fibers are collected onto a receiving surface formed by a planar or drum-shaped perforated conveyor, a succion device installed on the opposite side of the perforated conveyor forces the fibers to deposit substantially flat on the conveyor so that the fibers are organized as web conformed to the receiving surface.

Binder is sprayed onto the fibers just after generation and before collection on the receiving surface, and creates effective bonding at the junction between fibers after the collected batt is subjected to heat curing or cross-linking. The face of the collected web in contact with the receiving surface forms one of the main face of the final fiber batt. Binder content in the batt product may generally range from 4 to 9 wt% based on the total weight of the product, preferably 4 to 7wt%. Such binder bonded batt exhibits interesting elasticity in the direction transversal to the main surface. Therefore the batt product can be rolled even in higher density ranges like from 20 kg/m3 to 35 kg/m3. This is no longer possible if the fibers are reoriented with a component along the direction transversal to the main face, like when the batt is crimped or slabs from the batt are reoriented 90° like in the so-called lamellae batt products.

One or both facing sheets may be applied on the outer main face of the collected web while the binder is still reactive; typically, one facing sheet can be applied on the receiving surface before collection of the fibers or one or both facing sheets can be applied on the collected web before subjecting the batt to heat curing or cross-liking. Alternatively one or both facing sheets may be applied after the batt is subjected to heat curing or cross-linking, and adhered to the batt by means of an adhesive.

The facing sheet may consist of a veil or mat or non woven glass fibers, or a fabric of woven glass fibers, with a gramweight ranging from 10 to 70 g/m², especially from 25 to 60 g/m².

Alterations in the batt according to the invention generally may have the effect of locally modifying the fibrous structure at some locations regularly distanced to one another, the alterations being performed in the direction transverse to the length of the batt. This would result in a segmented batt, with segments of the semi-rigid structure separated by lines of more flexible structure or even where the fibrous structure is disrupted at scored portions.

Alterations may affect a substantial portion of the batt's thickness, however keeping a minimum of the fibrous structure unaffected close to the facing sheet, typically about 1 to 3 mm.

In one embodiment, the alteration affect not less than 90% of initial thickness of the batt.

In another embodiment, the alterations affect only a portion of the batt's thickness, typically not more than 50% of initial thickness, when the thickness is above 25 mm.

The alterations are generally regularly spaced longitudinally (across the width of the batt) by a distance of 1 to 20 cm, especially from 1 to 5 cm , preferably 1 to 2 cm. Closer alterations in the range of 1 to 2 cm, are of most interest for thicker batts of a thickness above 25 mm.

In addition to imparting additional flexibility to the batt, alterations are beneficial to the impregnation by the solution as well as subsequent drying or liquid removal. This is due to the array of channels created throughout the batt. The closer the alterations, the denser the array of channels, the easier the liquid removal, especially when the removal is to take place from the side edges of the fibrous batt, when the batt is drying in a rolled form and liquid removal occurs at the ends of the roll.

The fibers in the fiber batting sheet or the segmented fiber reinforced gel composites of the above processes comprise one or more materials selected from the group consisting of mineral wool, glass wool, fiber glass.

Certain scored non-woven sheets of mineral wool are known or available in the market for insulating pipes and bends, with a fiber orientation mostly along the direction transverse to the main face of the product. These products are not suitable for use as a reinforcement in a thermally insulating composite in higher thickness because the fibrous structure does not allow to compress the non woven sheet in a rolled package. Therefore, the length of material available in a roll is very limited and not sufficient for an industrial process of composite manufacturing. Moreover the fiber orientation mainly transversal to the main face favors heat transfer along this direction and does not allow to achieve highly performing thermal insulation composites.

When using the batt for making composite by impregnation with a liquid solution, the fiber structure can easily be penetrated by the liquid and can be transported in the wet impregnated state without degradation, can be rolled in the wet state and unrolled in the wet or dry state without degradation.

Especially when used with an impregnation solution of as gel precursor of one or more material selected from the group consisting of silica, the thermal conductivity of the reinforced gel composites made from the above processes is less than 25 mW/mK at ambient conditions.

A segmented fiber reinforced gel composite is obtained wherein the gel is continuous through the fiber in at least one segment and at least one gap exists between at least two adjoining segments with discontinuity in both the fiber and the gel.

The invention will be further described in relation with the drawings as follows :
- Figure 1. Manufacturing of fiber-reinforce aerogel composite product starting from fiber-reinforcement sheets and gel precursors.

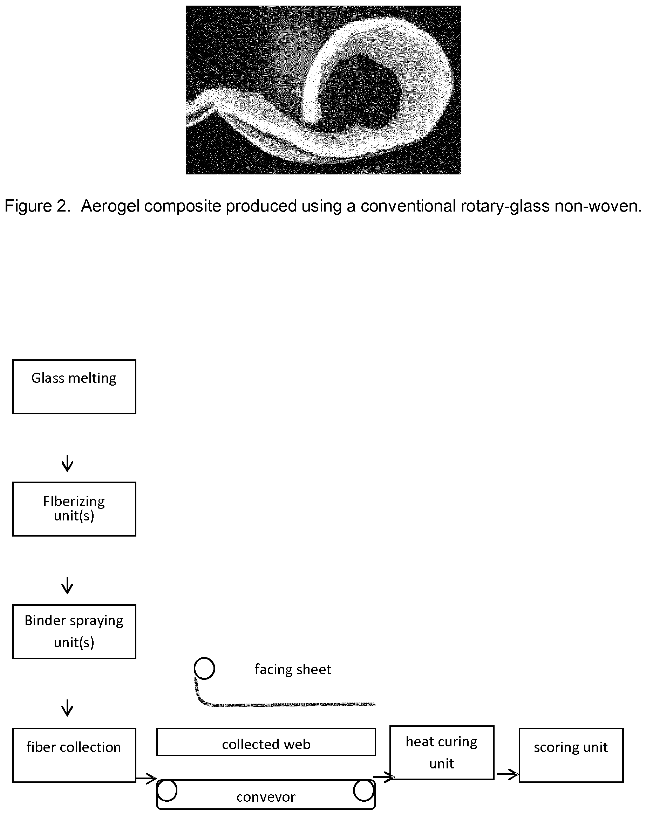

- Figure 2. Aerogel composite produced using a conventional rotary-glass non-woven.

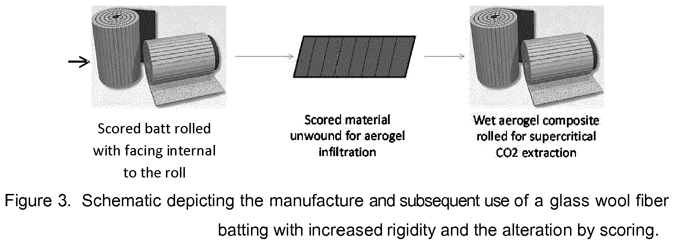

- Figure 3. Schematic depicting the manufacture of a glass wool fiber batting with increased rigidity and the alteration by scoring .
- Figure 4. A comparison of the dried gel composites produced with non-segmented glass wool sheet (above) and with segmented glass wool sheet (below).
- Figure 5. Segmented wet gel composite and the segmented dry gel composite.

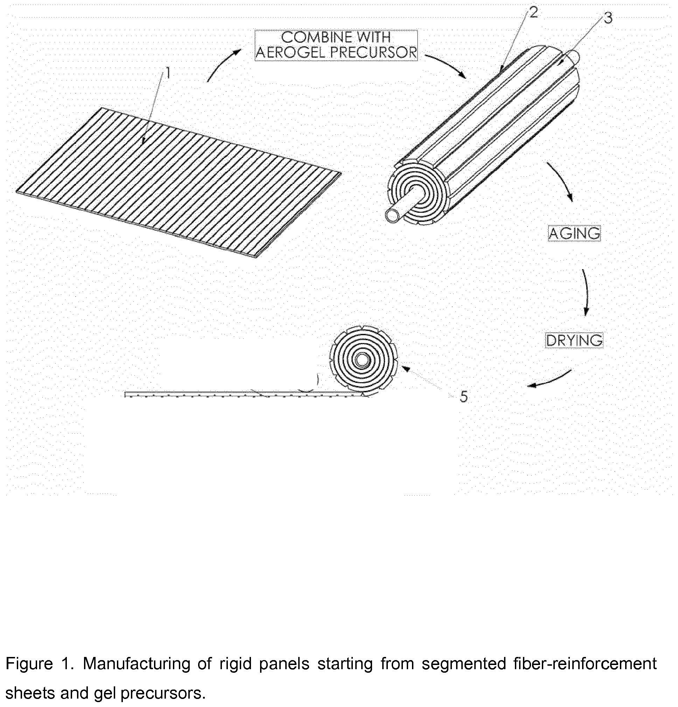

Figure 1 illustrates a process for making a rigid panel from a non-woven reinforcement material according to the invention. A fiber batting represented as a segmented non-woven sheet (1) is unrolled onto a moving conveyer belt and gel precursor in a liquid form is applied on top of the unrolled non-woven and allowed to infuse into the non-woven to become a gel sheet during its travel through the conveyor belt. At the end of the conveyor belt, the gel-infused non-woven (a wet gel composite sheet) is rolled onto a mandrel (2). This rolling may visibly show the gaps between the segments. Thus rolled wet gel composite is transferred to a vessel to allow the aging to take place resulting in a gel composite with various desired strength and other properties. Optionally, the rolls may be rinsed with a solvent and in yet another embodiment treated with hydrophobic agents to impart surface hydrophobicity. The roll is subsequently dried using various methods including supercritical carbon dioxide drying. The dried gel may be optionally carried through an oven to further remove any residual solvent or water. Thus dried gel composite rolls are unrolled and can be cut to desired sizes and packaged for shipment or for additional inspection and further processing or drying.

The invention is based on the finding that a thick semi-rigid batting product can be successfully used as a starting material for a composite, when provided with a surface reinforcement made of a facing sheet.

The facing sheet can be adhered to the main face by means of the adhesive or by means of the same binder as the one bonding the fibers of the fibrous batt.

The facing sheet provides additional tensile strength that allow the product to be wound/unwound with minimal delamination or buckling.

In addition the face sheet can now be oriented outwards to provide some level of dust containment for the final composite including particulate material or aerogel board stock.

Additional alterations, such as longitudinal segmentation (across the width of the blanket) of the rigid non-woven product enables retaining sufficient flexibility so that the product can be wound/unwound with minimal delamination or buckling.

Segmented non-woven blankets may be prepared by various methods including mechanically punching the non-woven blanket at regularly spaced locations or scoring the non-woven partially across its thickness.

The segmented sheet is carried by a face sheet/veil through the aerogel production process and fabrication of flat panel. The non-woven fiber reinforcement can be efficiently wound in a cylinder and unwound into a flat board-like shape with little to no damage. This allows for the efficient casting of a wet gel/fiber composite using a flat conveyor belt and the winding of the final wet-gel composite to enable efficient utilization in processes involving the use of cylindrical vessels. Alternatively, segmented non-woven sheet may be pre-wound with another non-permeable layer and gel precursor may be infused into the fiber matrix, unwound and further processed to produce a dry segmented gel composite. More importantly, the air gap that is visible in the as produced gel composite (cylinder form) effectively disappears upon unwinding into flat stock, ensuring that thermal performance of a typical aerogel-fiber composite is maintained. The final material can be unwound into a near perfect flat panel, enabling the efficient production of rigid aerogel-based boards suitable for building and construction applications. What was surprising and unexpected was that when wound, the gaps, i.e. gaps between two segments separated in a clean line without shattering the dried gel. Aerogels and other dried gels made from the above mentioned precursors are fragile material that when subjected to any stress are prone to crack and shatter. However, the invention provides a rigid carrier wherein a strong enough aerogel may be created, while the dried gels can be broken in clean lines at the gaps where alterations have been performed, such that when subsequently wound, they produce a substantially planar surface. This allows for efficient manufacturing of flat panels. Furthermore, individual segments are still rigid, even if they are amenable to be wound and unwound. This segment rigidity allows for the manufacturing of rigid panels by laminating one or more gel composite sheets to extra layers using adhesives of various kind.

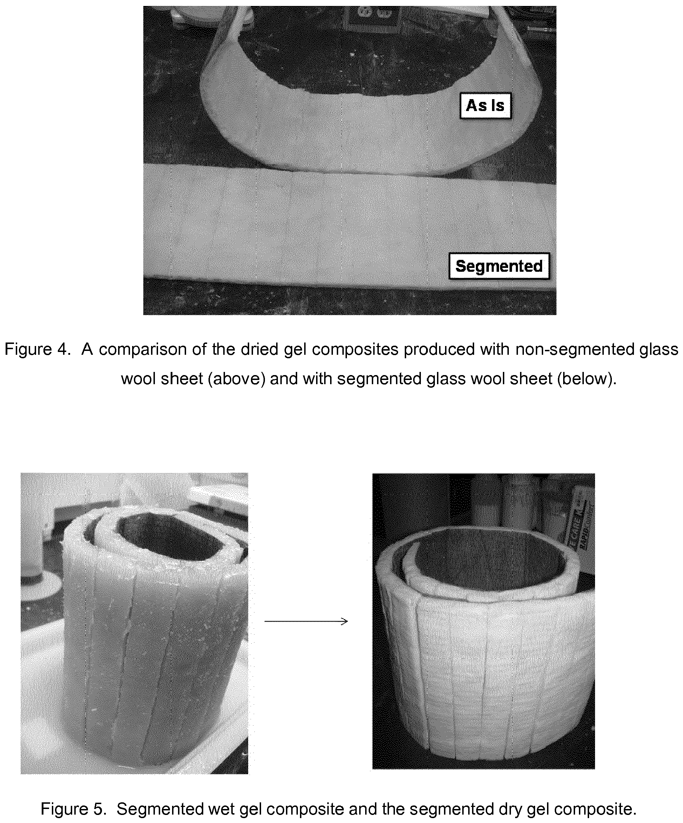

In one example, the fiber batt was used to produce small scale rolls of aerogel composites measuring 36" x 8". Specifically, a segmented rotary-glass based glass wool insulation was used to produce gel composite materials in a rolled good process. The non-woven and the gel composites were wound around a mandrel of 6" diameter. Using standard silica aerogel chemistry, wet gel composites were produced using this glass wool sheet (scored at 1 or 2" intervals) and were subsequently rolled around a 6" diameter after a 12 minute period of syneresis. Upon winding, the wet gel cleanly fractures at the longitudinal scores to enable flexibility and maintain the integrity of the fiber/aerogel segments (Figure 4).

The wound wet gel/fiber composite is now amenable to processing in a cylindrical vessel for aging, rinsing and supercritical CO2 extraction and is in an ideal shape to maximize the volume of a cylindrical vessel. After removal of solvent via supercritical CO2 extraction, the material maintains sufficient flexibility such that it can be unwound into flat stock (Figure). In contrast to aerogel composites produced with non-segmented glass wool of the same type, the use of a segmented glass wool has significantly reduced/eliminated any material defects associated with winding and unwinding steps. The segmented gel composite maintains flexibility such that it can be unwound and panelized to produce a board stock (Figures 1, 4).

Aerogel production processes involving the use of high pressures necessarily involve cylindrical pressure vessels. Even low pressure steps such as aging or rinsing is efficient carried out using cylindrical vessels. Fluid handling is easier in cylindrical vessels than vessels of any
other shape. Good engineering design has shown that pressure vessels with alternate shapes (i.e. cuboid) need a substantially increased wall thickness in order to avoid catastrophic rupture. It thus can be shown that the most economical version of a pressure vessel is produced in the cylinder shape. It thus also stands to reason that the high pressure associated with supercritical CO2 extraction of flexible aerogel material will involve the use of cylindrical pressure vessels. In order to fully maximize the use a cylindrical vessel, one must process a flexible gel composite such that it adopts a cylindrical-like shape and thus fills any vessel to nearly 100% of the available volume. In order to accomplish this, the fiber reinforcement of the aerogel composite must be able to sustain winding and unwinding and must conform without failure to small radii on the order of 3-18 inches. The present invention enables non-wovens that are sufficiently rigid, non-wovens typically containing appreciable amounts of binder. Because these non-woven materials are typically lower in cost than the other types of non-wovens (i.e. needlepunched), the present invention has the capability of substantially lowering the cost of fiber-reinforced gel composite insulation.

In general, the gel precursors useful in the present invention comprise metal oxides that are compatible with the sol-gel process where upon polymerization form a gel network(s). The silica precursors used may be chosen from but are not limited to: alkoxysilanes, partially hydrolyzed alkoxysilanes, tetraethoxylsilane (TEOS), partially hydrolyzed TEOS, condensed polymers of TEOS , tetramethoxylsilane (TMOS), partially hydrolyzed TMOS, condensed polymers of TMOS, tetra-n-propoxysilane, partially hydrolyzed and/or condensed polymers of tetra-n-propoxysilane, or combinations thereof. TEOS, partially hydrolyzed polyethysilicates, and polyethylsilicates are some of the more common commercially available silica precursors. The fillers may be dispensed in the gel precursor solution at any point before a gel is formed. Gel formation may be viewed as the point where a solution (or mixture) exhibits resistance to flow and/or forms a continuous polymeric network throughout its volume. Preferably the mixture comprising fillers and precursors is a homogenous solution, conducive to gel formation. In addition to the silica based precursors, precursors of zirconia, yttria, hafnia, alumina, titania, ceria are useful. In additional embodiments, organic precursors such as polyacrylates, polystyrenes, polyacrylonitriles, polyurethanes, polyimides, polyfurfural alcohol, phenol furfuryl alcohol, melamine formaldehydes, resorcinol formaldehydes, cresol formaldehyde, phenol formaldehyde, polyvinyl alcohol dialdehyde, polycyanurates, polyacrylamides, various epoxies, agar, and agarose and combinations of the above may be used as gel precursors in the present invention. Additionally, hybrid organic-inorganic gel precursors with various combinations of the species described above may be used.

Suitable solvents for use herein include: lower alcohols with1 to 6 carbon atoms, preferably 2 to 4, although other solvents can be used as is known in the art. Ethanol, is typically most favored. Examples of other useful solvents include but are not limited to: ethyl acetate, ethyl acetoacetate, acetone, dichloromethane, tetrahydrofuran and the like. Of course in order to achieve a desired level of dispersion or solution certain gel precursor/filler systems, a multi-solvent approach may be required.

Generally, gels may be formed via maintaining the mixture in a quiescent state for a sufficient period of time, changing the pH of the solution, directing a form of energy onto the mixture, or a combination thereof. Exemplary forms of energy include: a controlled flux of
electromagnetic (ultraviolet, visible, infrared, microwave), acoustic (ultrasound), or particle radiation. In the present invention the gel is formed after the gel precursor is combined with the segmented reinforcements of the present invention.

Gels may be additionally aged prior to drying to further strengthen the gel structure by increasing the number of cross-linkages. This procedure is useful for preventing potential
volume loss during drying, or simply a stronger final gel. Aging can involve: maintaining the gel (prior to drying) at a quiescent state for an extended period, maintaining the gel at elevated temperatures, addition of cross-linkage promoting compounds or any combination thereof. Aging time period typically requires between about 1hr and several days. The preferred temperatures
are usually between about 10°C and about 100°C.

Drying plays an important role in engineering the properties of aerogels, such as porosity and density which influence the material thermal conductivity. To date, numerous drying methods have been explored. U.S. patent 6,670,402 teaches drying via rapid solvent exchange of solvent(s) inside wet gels using supercritical CO2 by injecting supercritical, rather than liquid, CO₂ into an extractor that has been pre-heated and pre-pressurized to substantially supercritical conditions or above to produce aerogels. U.S. patent 5,962,539 describes a process for obtaining an aerogel from a polymeric material that is in the form a sol-gel in an organic solvent, by exchanging the organic solvent for a fluid having a critical temperature below a temperature of polymer decomposition, and supercritically drying the fluid/sol-gel. U.S. patent 6,315,971 discloses processes for producing gel compositions comprising: drying a wet gel comprising gel solids and a drying agent to remove the drying agent under drying conditions sufficient to minimize shrinkage of the gel during drying. Also, U.S. patent 5,420,168 describes a process whereby Resorcinol/Formaldehyde aerogels can be manufactured using a simple air drying procedure. Finally, US patent 5,565,142 describes subcritical drying techniques. The embodiments of the present invention can be practiced with drying using any of the above techniques. In some embodiments, it is preferred that the drying is performed at vacuum to below super-critical pressures (pressures below the critical pressure of the fluid present in the gel at some point) and optionally using surface modifying agents.

### EXAMPLES

The following example illustrates the preparation and performance of an aerogel-based rigid panel made with a fiber batt in accordance with the above invention.

The batting is made from glass wool, using the conventional rotary centrifugation process.

The glass fibers are received on a collecting conveyor in such way that the fibers are arranged in a substantially laminar organization with fibers oriented mostly parallel to the main face in contact with the conveyor.

The batt is produced with a density of 32 kg/m3 and thickness of 15 mm.

A facing sheet made of a glass fabric is adhered to the main face by means of the same binder as sprayed on the fibers just after generation.

The binder content in the fiber batt is about 4-6 weight % based on the total product weight.

Precise longitudinal segmentation of the glass wool fiber batt, was accomplished via the use of utility knife or automated rotary tool in combination with a custom produced cutting jig aimed at accomplishing a cut depth of no less than 90% of the original thickness. Using this method, segmented glass wool materials measuring 36" x 8" were produced with both 1 and 2" segments. A requisite amount of a soluble silica source (i.e. sol) and condensation catalyst, aqueous ammonium hydroxide, were combined and allowed to penetrate the glass-wool non-woven sheet in a horizontal/flat configuration. After a syneresis period of 15 minutes the gel/fiber composited was wound around a mandrel possessing a 6" diameter. The rolling of such a composite was accomplished by ensuring that the segments were oriented away from the mandrel during winding. In such a way, the stresses of winding were relieved as gaps are formed along each segmentation. The gel/fiber composite in the cylindrical form was then subject to a period of aging in which the material is exposed to a hot ethanol solution of ammonium hydroxide and a hydrophobic agent containing alkyl and silyl groups. After aging, the rolled material is transferred to a cylindrical pressure vessel and is then subject to supercritical CO2 extraction to remove all solvent.

The material was then heat treated to remove any residual moisture and/or volatiles. The material is then unwound horizontally to adopt a flat configuration. At the same time an organic based adhesive was spray applied (to the aerogel side) at a nominal coat weight of 20-40 g/m2. A secondary piece of fully processed segmented material was then laminated to the first piece in such a fashion such that the segmentations are staggered and that the face sheets are orientated away from the bondline. The material was then subject to a short period of compressive stress (<0.25 PSI) to ensure complete mating and curing of organic adhesive. The compressive stress was then relieved and the resulting panel was characterized for thermal conductivity.

| **Segment Size** | **Thermal Conductivity (mW/mK)** | |
|---|---|---|
| | **10 °C** | **37.5 °C** |
| 1" | 14.7 | 16.1 |
| 2" | 14.7 | 15.8 |

## Claims

1. Fiber batting for the manufacture of thermally insulating composite comprising :
- a semi-rigid fibrous batt including mineral wool fibers bonded by a binder
- a facing sheet adhered to one outer main surface of the fibrous batt by means of a binder or adhesive,
wherein
- the density of the semi-rigid fibrous batt is above 20 kg/m3, especially selected in the range from 22 to 35 kg/m3,
- the thickness of the fibrous batt is at least 15 mm , especially 20 mm
- the mineral wool fibers are arranged in a substantially laminar layout with a majority of fibers parallel to the main face,
- the batt being provided in a rolled form with the facing sheet interior to the roll and is packaged into a roll packaged unit.

2. Fiber batting according to claim 1 wherein the batt is provided with alterations such that it can be rolled with the facing sheet interior to the roll.

3. Fiber batting according to claim 1 or 2 wherein the batt is compressed inside the roll to a thickness of 1:2 to 1:6 of the initial thickness.

4. Fiber batting according to claim 2 or 3, wherein the alterations are obtained by scoring the fibrous batt throughout at least one half of its thickness.

5. Fiber batting according to claim 4, wherein the depth of scoring varies or the scoring is not continuous across the width of the batt.

6. Fiber batting according to claim 4 or 5, wherein the thickness of the batt is higher than 25 mm and the depth of scoring is less than 1:2 of the batt's thickness.

7. Fiber batting according to any one of claims 2 to 6, wherein the alterations are obtained by locally modifying mechanically the fibrous structure, especially by punching so as to soften the batt locally.

8. Fiber batting according to any one of the preceding claims, wherein the alterations are regularly spaced longitudinally by a distance of 1 to 20 cm, especially from 1 to 5 cm , preferably 1 to 2 cm.

9. Fiber batting according to any one of the preceding claims, wherein the batt is at least 5 m, especially from 10 to 40 m long before rolling.

10. Fiber batting according to any one of the preceding claims, wherein the facing sheet comprises fibers, especially is selected from glass fiber mats or fabrics.

11. Fiber batting according to any one of the preceding claims, wherein the mineral fibers are mineral wool or glass wool fibers.

12. Use of the fiber batting according to any one of the preceding claims for making a non-aerogel containing composite, wherein the voids between fibers are filled with an impregnation composition combining particulate material with a binder and/or with a foaming composition based on organic and/or inorganic materials.

## Patentansprüche

1. Faserwatte zur Herstellung eines wärmeisolierenden Verbundstoffs, umfassend:
- ein halbstarres Faservlies mit Mineralwollfasern, die durch ein Bindemittel verbunden sind
- eine Decklage, die an einer äußeren Hauptoberfläche des Faservlieses mithilfe eines Bindemittels oder Klebstoffs haftet,
wobei
- die Dichte des halbstarren Faservlieses mehr als 20 kg/m³ beträgt, insbesondere ausgewählt aus dem Bereich von 22 bis 35 kg/m³,
- die Dicke des Faservlieses mindestens 15 mm, insbesondere 20 mm beträgt
- die Mineralwollfasern im Wesentlichen laminar angeordnet sind, wobei eine Mehrheit der Fasern parallel zur Hauptfläche liegt,
- das Vlies in gerollter Form bereitgestellt ist, wobei die Decklage innen zur Rolle angeordnet ist und das Vlies in einer Rollenverpackungseinheit verpackt ist.

2. Faserwatte nach Anspruch 1, wobei das Vlies mit Änderungen versehen ist, sodass es mit der Decklage nach innen zur Rolle gerollt werden kann.

3. Faserwatte nach Anspruch 1 oder 2, wobei das Vlies innen in der Rolle auf eine Dicke von 1:2 bis 1:6 der Anfangsdicke zusammengedrückt wird.

4. Faserwatte nach Anspruch 2 oder 3, wobei die Änderungen durch Spalten des Faservlieses über mindestens die Hälfte seiner Dicke erhalten werden.

5. Faserwatte nach Anspruch 4, wobei die Tiefe der Spaltung variiert oder die Spaltung über die Breite des Vlieses nicht kontinuierlich ist.

6. Faserwatte nach Anspruch 4 oder 5, wobei die Dicke des Vlieses mehr als 25 mm beträgt und die Tiefe der Spaltung weniger als 1:2 der Vliesdicke beträgt.

7. Faserwatte nach einem der Ansprüche 2 bis 6, wobei die Änderungen durch lokales mechanisches Modifizieren der Faserstruktur erhalten werden, insbesondere durch Stanzen, um das Vlies lokal weicher zu machen.

8. Faserwatte nach einem der vorangehenden Ansprüche, wobei die Änderungen regelmäßig in Längsrichtung mit einem Abstand von 1 bis 20 cm, insbesondere 1 bis 5 cm, vorzugsweise 1 bis 2 cm angeordnet sind.

9. Faserwatte nach einem der vorangehenden Ansprüche, bei dem das Vlies vor dem Walzen eine Länge von mindestens 5 m, insbesondere von 10 bis 40 m aufweist.

10. Faserwatte nach einem der vorangehenden Ansprüche, wobei die Decklage Fasern umfasst und insbesondere aus Glasfasermatten oder Geweben ausgewählt ist.

11. Faserwatte nach einem der vorangehenden Ansprüche, wobei die Mineralfasern Mineralwoll- oder Glaswollfasern sind.

12. Verwendung der Faserwatte nach einem der vorangehenden Ansprüche zur Herstellung eines Verbundstoffs, der kein Aerogel enthält, wobei die Hohlräume zwischen den Fasern mit einer Imprägnierungszusammensetzung gefüllt sind, die partikelförmiges Material mit einem Bindemittel und/oder mit einer Schaumzusammensetzung auf der Grundlage von organischen und/oder anorganischen Materialien kombiniert.

## Revendications

1. Nappe de fibres pour la fabrication d'un composite thermo-isolant comprenant :
- une nappe fibreuse semi-rigide comprenant des fibres de laine minérale liées par un liant
- une feuille de parement collée à une surface principale externe de la nappe fibreuse au moyen d'un liant ou d'un adhésif,
dans laquelle
- la densité de la nappe fibreuse semi-rigide est supérieure à 20 kg/m³, en particulier choisie dans la plage allant de 22 à 35 kg/m³,
- l'épaisseur de la nappe fibreuse est d'au moins 15 mm, en particulier de 20 mm
- les fibres de laine minérale sont disposées dans une configuration sensiblement laminaire avec une majorité de fibres parallèles à la face principale,
- la nappe est fournie sous forme enroulée avec la feuille de parement à l'intérieur du rouleau et est conditionnée en une unité emballée en rouleau.

2. Nappe de fibres selon la revendication 1, dans laquelle la nappe est pourvue d'altérations de sorte qu'elle puisse être enroulée avec la feuille de parement à l'intérieur du rouleau.

3. Nappe de fibres selon la revendication 1 ou 2, dans laquelle la nappe est comprimée à l'intérieur du rouleau jusqu'à une épaisseur de 1:2 à 1:6 de l'épaisseur initiale.

4. Nappe de fibres selon la revendication 2 ou 3, dans laquelle les altérations sont obtenues en entaillant la nappe de fibres sur au moins la moitié de son épaisseur.

5. Nappe de fibres selon la revendication 4, dans laquelle la profondeur d'entaillage varie ou l'entaillage n'est pas continu sur la largeur de la nappe.

6. Nappe de fibres selon la revendication 4 ou 5, dans laquelle l'épaisseur de la nappe est supérieure à 25 mm et la profondeur d'entaillage est inférieure à 1:2 de l'épaisseur de la nappe.

7. Nappe de fibres selon l'une quelconque des revendications 2 à 6, dans laquelle les altérations sont obtenues en modifiant localement de manière mécanique la structure fibreuse, en particulier par poinçonnage afin d'assouplir localement la nappe.

8. Nappe de fibres selon l'une quelconque des revendications précédentes, dans laquelle les altérations sont régulièrement espacées longitudinalement d'une distance de 1 à 20 cm, en particulier de 1 à 5 cm, de préférence de 1 à 2 cm.

9. Nappe de fibres selon l'une quelconque des revendications précédentes, dans laquelle la nappe a une longueur d'au moins 5 m, en particulier de 10 à 40 m avant le roulage.

10. Nappe de fibres selon l'une quelconque des revendications précédentes, dans laquelle la feuille de parement comprend des fibres, en particulier est choisie parmi des tissus ou des mats en fibre de verre.

11. Nappe de fibres selon l'une quelconque des revendications précédentes, dans laquelle les fibres minérales sont des fibres de laine minérale ou de laine de verre.

12. Utilisation de la nappe de fibres selon l'une quelconque des revendications précédentes pour la fabrication d'un composite ne contenant pas d'aérogel, dans laquelle les vides entre les fibres sont remplis d'une composition d'imprégnation combinant un matériau particulaire avec un liant et/ou une composition moussante à base de matières organiques et/ou inorganiques.
